# DEMANDE DE BREVET EUROPEEN

(11) **EP 4 108 979 A1**
(43) Date de publication de la demande: **28.12.2022**
(21) Numéro de dépôt: 22179767.3
(22) Date de dépôt: 18.06.2022
(51) Int. Cl.: F21L 4/04, F21V 21/088, F21V 17/10, A42B 3/04, F21V 21/084, B62J 6/00

(54) **ADAPTATEUR UNIVERSEL POUR LAMPE PORTATIVE AMOVIBLE**

(30) Priorité: 25.06.2021 FR 2106875
(71) Demandeur: Zedel, 38920 Crolles (FR)
(72) Inventeur: GAGNEUX, Tiphaine, 38000 GRENOBLE (FR); BORTOLOTTI, Raphaël, 74940 Annecy le Vieux (FR); REYMOND, Frédéric, 38190 LES ADRETS (FR); MARTIN, Grégory, 38190 LES ADRETS (FR)
(74) Mandataire: Schuffenecker, Thierry

(57) **Abrégé**

Adaptateur pour une lampe portative amovible destiné à être fixé sur un support et comportant :
une base ou un cadre (101) comportant une première patte (110) et une seconde patte (120);
dans lequel la première patte (110) comporte, sur sa face supérieure, une première rainure de profil sensiblement circulaire, configurée pour permettre un engagement d'une première nervure (21) sensiblement circulaire d'une lampe portative amovible présentant une première dimension (20) ;
dans lequel la seconde patte (120) comporte, sur sa face inférieure, une seconde rainure de profil sensiblement circulaire, configurée pour permettre un engagement d'une seconde nervure (22) de profil sensiblement circulaire de ladite lampe portative amovible (20);
dans lequel l'adaptateur comporte un système de verrouillage basé sur une butée ou un clip de verrouillage destiné à bloquer l'engagement desdites première et seconde nervures (21, 22) à une position prédéterminée.

## Description

### Domaine technique

La présente invention concerne le domaine des lampes portatives et plus précisément un adaptateur universel pour lampe portative amovible

### Etat de la technique

L'utilisation de lampes portatives tend à se généraliser dans toutes les activités humaines, qu'il s'agisse d'activités professionnelles, sportives ou loisirs.

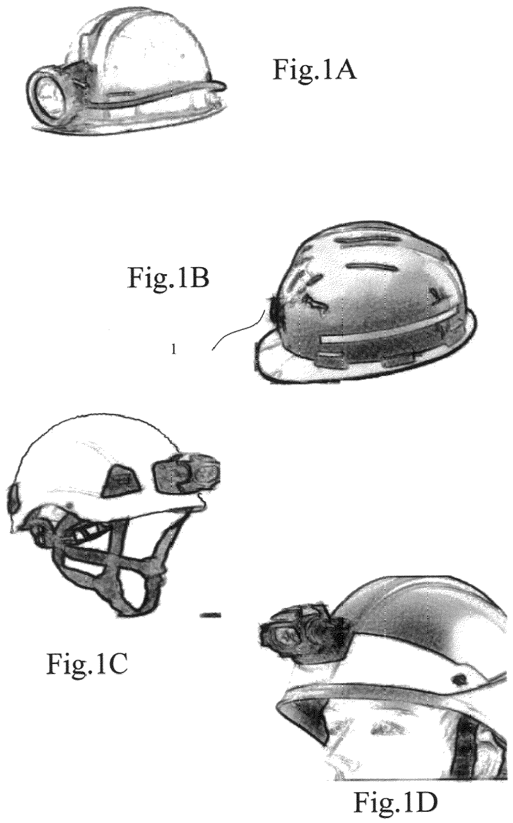

Historiquement, on avait équipé les casques de chantier ou de mineurs, comme ceux illustrés dans les figures 1A et 1B de lampe portatives. La figure 1B montre tout particulièrement un casque de mineur doté d'une patte 1 pour la fixation d'une lampe frontale.

Aujourd'hui, comme on le voit dans les figures 1C et 1D respectivement, les casques de sportifs mais également de chantiers sont équipés d'une fixation pour une lampe frontale.

On souhaite pouvoir développer les possibilités de fixation d'une lampe portative sur divers supports ou accessoires et, par conséquent, pouvoir compter sur un adaptateur universel permettant une fixation d'une vaste gamme de lampes portatives amovibles.

Tel est l'objet de la présente demande de brevet

### Exposé de l'invention

C'est un but de la présente invention de proposer un adaptateur universel permettant un système de fixation sécurisé pour une lampe portative amovible, sans risque de chute intempestive.

C'est un autre but de la présente invention de permettre un adaptateur universel qui permette un système de fixation compact avec une lampe portative amovible de dimensions variables.

C'est un troisième but de la présente demande de brevet de proposer une architecture d'adaptateurs pouvant se décliner en plusieurs versions : casque, bicyclette, ou tout support quelconque.

La présente invention permet d'atteindre tous ces buts en réalisant un adaptateur pour une lampe portative amovible comportant une base ou un cadre comportant une première patte et une seconde patte.

La première patte comporte, sur sa face supérieure, une première rainure de profil sensiblement circulaire, configurée pour permettre un engagement d'une première nervure sensiblement circulaire d'une lampe portative amovible présentant une première dimension. D'une manière similaire, la seconde patte comporte, sur sa face inférieure, une seconde rainure de profil sensiblement circulaire, configurée pour permettre un engagement d'une seconde nervure de profil sensiblement circulaire de ladite lampe portative amovible . Par ailleurs, l'adaptateur comporte un système de verrouillage basé sur une butée ou un clip de verrouillage destinés à bloquer l'engagement desdites première et seconde nervures à une position prédéterminée dans les première et seconde rainures.

Dans un mode de réalisation particulier, la base comporte une languette ou clip de verrouillage comportant un téton venant se positionner au milieu de la première rainure correspondant à la première patte La languette présente une flexibilité suffisante pour permettre une déformation élastique en sorte que lorsque l'on engage la première nervure de la lampe - ayant une encoche en son milieu - dans la rainure correspondante de la première patte, on vient imprimer une sollicitation sur la languette ou clip de verrouillage de manière à fléchir celle-ci afin de permettre le glissement de ladite première nervure jusqu'à ce que l'encoche vienne se positionner sous le téton de la languette ou clip de verrouillage de manière à venir bloquer le positionnement de la lampe.

De préférence, l'adaptateur comporte une troisième patte située au dessus de la seconde patte et la troisième patte comporte, sur sa face inférieure, une troisième rainure de profil sensiblement circulaire configurée pour permettre un engagement d'une seconde nervure de profil sensiblement circulaire d'une lampe portative présentant une deuxième dimension plus grande.

De préférence, les rainures correspondant auxdites première, seconde et troisième pattes circulaires présentent un rayon de courbure compris dans une plage égale à 100-200mm, et de préférence égal à 150mm.

Dans un mode de réalisation particulier, l'adaptateur est un adaptateur de bicyclette.

Dans un autre mode de réalisation, l'adaptateur est un adaptateur de casque de chantier comportant une languette arrière configurée pour être insérée dans une fente correspondante située à l'avant d'un casque de chantier de manière à permettre la fixation d'une lampe portative amovible ou tout autre accessoire sur le casque de chantier. La languette est réalisée dans un matériau élastique permettant, lors de l'insertion de la languette dans la fente du casque, d'imprimer une sollicitation de l'adaptateur vers le casque de chantier. Optionnellement, la languette arrière comporte un renfoncement circulaire destiné à recevoir un pastille ou patch circulaire autocollante permettant une fixation sécurisée de l'adaptateur sur le casque de chantier.

Dans un autre mode de réalisation, l'adaptateur comporte quatre pattes de fixation dotées chacune d'un adhésif autocollant de manière à permettre la fixation de l'adaptateur sur un support sensiblement plan.

### Description des dessins

D'autres caractéristiques, but et avantages de l'invention apparaîtront à la lecture de la description et des dessins ci-après, donnés uniquement à titre d'exemples non limitatifs. Sur les dessins annexés :
Les figure 1A, 1B, 1C et 1D illustrent des systèmes de fixation connus pour des casques.
Les figures 2A, 2B, 2C et 2D montrent quatre modes de réalisation d'un adaptateur conforme à la présente invention.
Les figures 3A, 3B, 3C, 3D, 3E, 3F, 3G, 3H, 3I, 3J et 3M illustrent la mise en place d'une première lampe amovible de grande dimension, sur l'adaptateur de la figure 2D.
Les figures 4A, 4B, 4C, 4D, 4E, 4F, 4G, 4H, 4I, 4J et 4K illustrent la mise en place d'une deuxième lampe amovible, de dimension réduite, sur l'adaptateur de la figure 2D.
Les figures 5A, 5B, 5C et5D illustrent une troisième lampe amovible réversible, permettant, au choix de l'utilisateur, deux positionnements différents de la lampe sur l'adaptateur.
Les figures 6A, 6B, 6C, 6D, 6E, 6F, 6G et 6H illustrent la mise en place de la troisième lampe amovible sur l'adaptateur de la figure 2D, dans lequel le bouton de commande est positionné en haut.
Les figures 7A, 7B, 7C, 7D, 7E, 7F, 7G et 7H illustrent la mise en place de la troisième lampe amovible sur l'adaptateur de la figure 2D, dans lequel le bouton de commande est positionné en bas.

### Description des modes de réalisation

On décrit à présent une structure générale d'un adaptateur universel autorisant une fixation compacte pour une vaste gamme de lampes portatives amovibles et plus générale tout accessoire amovible utile.

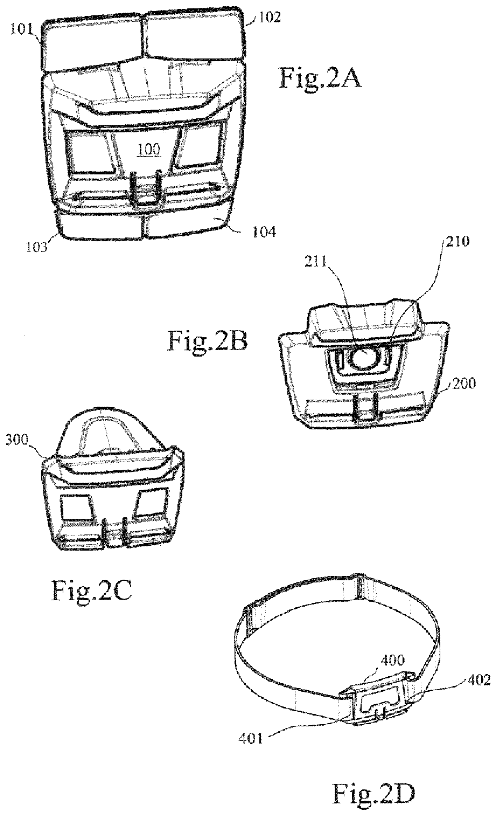

Cette structure générale peut être déclinée suivant différentes modes de réalisation, comme cela est illustré dans les figures 2A-2D.

En effet, la figure 2A illustre un mode de réalisation d'un adaptateur 100 conforme à la présente invention comportant quatre pattes de fixation 101, 102, 103, 104 dotés chacune d'un adhésif autocollant de manière à permettre la fixation de l'adaptateur sur un support sensiblement plan ou courbe.

La figure 2B illustre plus spécifiquement un second mode de réalisation d'un adaptateur 200 décliné pour un casque de chantier, comportant une languette arrière 211 pouvant s'insérer à l'intérieur d'une fente prédéterminée située à l'avant d'un casque de chantier. La Languette 211 est réalisée dans un matériau élastique permettant, lors de l'insertion de la languette dans la fente du casque, d'imprimer une sollicitation de l'adaptateur vers le casque de chantier. Spécifiquement, la languette comporte 211 comporte un renfoncement circulaire destiné à recevoir un pastille ou patch circulaire autocollante permettant une fixation plus sécurisée si l'utilisateur le souhaite.

La figure 2C illustre un troisième mode de réalisation d'un adaptateur 300 pour bicyclette ou une motocyclette pouvant être fixé notamment sur un guidon.

Enfin, la figure 2D illustre un quatrième mode de réalisation d'un adaptateur 400 spécifiquement doté de pattes de fixation 401-402 pour un bandeau afin de réaliser une lampe frontale.

On décrira à présent plus en détail l'adaptateur de la figure 2A, étant entendu que la description s'appliquera bien évidemment à tous les autres adaptateurs des figures 2B-2D et d'autres également.

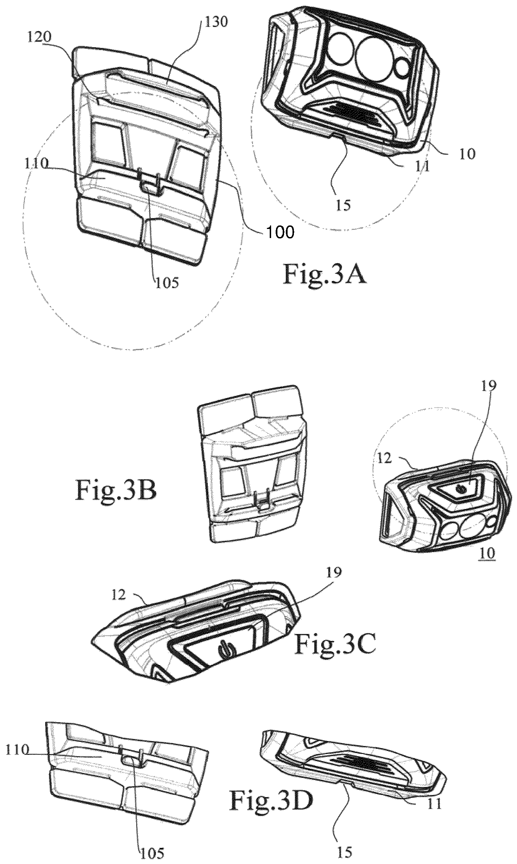

Les figures 3A, 3B et 3D illustrent plus précisément le détail d'un adaptateur 100 tel qu'illustré dans la figure 2A et comprenant, comme mentionné précédemment un cadre ou base 101 associé aux quatre pattes de fixation 101, 102, 103 et 104. Dans le but de permettre la fixation d'une lampe portative ou tout autre accessoire amovible utile, le support 100 est en outre doté d'un nouveau dispositif de rail circulaire en saillie comportant des rainures circulaires configurées pour s'appairer à des rainures circulaires d'un accessoire amovible correspondant.

Grâce à un tel système, l'utilisateur peut très facilement appairer ou faire glisser les deux parties ensemble et faciliter la fixation amovible de l'accessoire au support d'adaptateur et, par conséquent, au casque de sécurité. Le glissement des deux parties est basé sur un mouvement circulaire permis par les profils circulaires des rainures sur le dispositif de rail en saillie mais également par les nervures circulaires, en harmonie avec la géométrie particulière d'un casque de sécurité.

A cet effet, le support adaptateur 100 comporte une première patte de support horizontale inférieure 110, une seconde patte de support horizontale supérieure 120 et, optionnellement, une troisième patte de support horizontale supérieure 130 située au-dessus de la seconde patte supérieure.

Toutes les pattes de support 110, 120 et optionnellement 130 font partie intégrante du support d'adaptateur et réalise un dispositif en saillie relativement au support adaptateur, formant au moins un et de préférence deux systèmes de rails circulaires dans le but de permettre un mouvement circulaire d'une lampe portative ou tout accessoire amovible relativement au support adaptateur dans le but d'en assurer la fixation sur ce dernier. Plus particulièrement, chacune des pattes de support 110, 120 et optionnellement 130 comporte une rainure circulaire respective qui est configurée pour coopérer et s'appairer avec un profil également circulaire d'une nervure 11 ou 12 d'une lampe portative ou d'un élément d'accessoire devant être fixé de manière amovible au support adaptateur 100 et par suite au casque de sécurité.

Le dispositif de rail circulaire en saillie sert ainsi de guidage pour le mouvement circulaire préalablement au verrouillage et au maintien de la lampe portative ou de l'accessoire considéré. En effet, la liaison entre la lampe portative devant être guidée et le support adaptateur 100 servant de guidage est assurée par l'engagement des deux nervures circulaires 11 et 12 illustrées en figures 3A et 3B, solidaires de la lampe portative (ou de l'accessoire amovible) dans les rainures correspondantes également circulaire formées par les pattes de support 110, 120 (resp. 130) solidaire du support adaptateur 100.

Comme on le voit dans la figure 3A, la patte de support 110 a une rainure circulaire située sur sa face supérieure tandis que la patte de support 120 (resp. 130) comporte une rainure circulaire située sur face inférieure.

Dans un mode de réalisation, le profil circulaire des pattes de support présente un rayon de courbure compris dans une plage égale à 100-200mm. De préférence le rayon de courbure est fixé à 150mm.

Comme on le voit dans les figures 3A et 3B montrant respectivement deux vues en perspectives basse et haute, une lampe amovible 10 de grande dimension comporte une première nervure inférieure 11 de profil circulaire configurée pour venir s'engager dans la rainure circulaire également de la patte de support 110. D'une manière similaire, la lampe amovible 10 comporte une seconde nervure supérieure 12 de profil circulaire destinée à s'engager dans la rainure circulaire de la patte 130 qui est la plus éloignée de la patte 110.

En venant faire glisser les rainures circulaires 11 et 12 de la lampe 10 dans les deux rainures circulaires correspondantes des pattes de support 110 et 130, on peut ainsi créer un guidage circulaire préalablement à la mise en place d'une liaison solide et sécurisée entre la lampe 10 et l'adaptateur 100.

Dans un mode de réalisation particulier, l'on dispose également d'un mécanisme de butée ou de verrouillage, située de préférence sur la patte inférieure 110.

De préférence, on dispose une languette ou clip de verrouillage 105 faisant corps avec la base ou le cadre du support 100 et présentant une flexibilité suffisante pour permettre une déformation élastique. La languette ou clip de verrouillage 105 comporte à son extrémité une excroissance ou téton venant se positionner au milieu de la rainure correspondant à la première patte de support 110. La nervure 11 de la lampe 10 comporte en son milieu une encoche configurée pour coopérer avec le clip de verrouillage 105 de sorte que lorsque l'on engage la nervure 11 dans la rainure courbe de la patte de support 110, on vient imprimer une sollicitation sur la languette flexible 105 qui fléchit pour permettre le glissement de la nervure 11 dans la languette jusqu'à ce que l'encoche 15 vienne se positionner au niveau du téton de la languette ou clip flexible permettant à se dernier de retrouver sa position de repos, réalisant ainsi un blocage et verrouillage sécurisé de la lampe 10.

Bien évidemment, le système de verrouillage pourra être disposé sur un côté de la nervure dans un autre mode de réalisation.

On notera dans cet exemple illustratif que la lampe 110, de grande dimension, présente deux nervures inférieure 11 et supérieure 12 différentes puisque seule la nervure 11 présente une encoche 15. Cette dissymétrie au sein de la lampe 10, associée à la configuration de l'adaptateur 100 permet de réaliser un détrompage assurant que l'utilisateur positionnera toujours la lampe 10 dans le bon sens, c'est-à-dire avec un bouton de commande 19 situé en haut de la lampe 10.

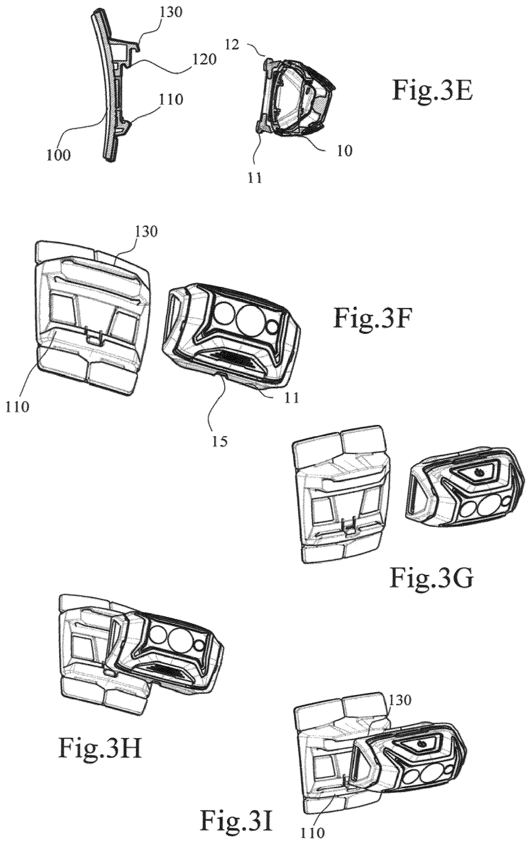

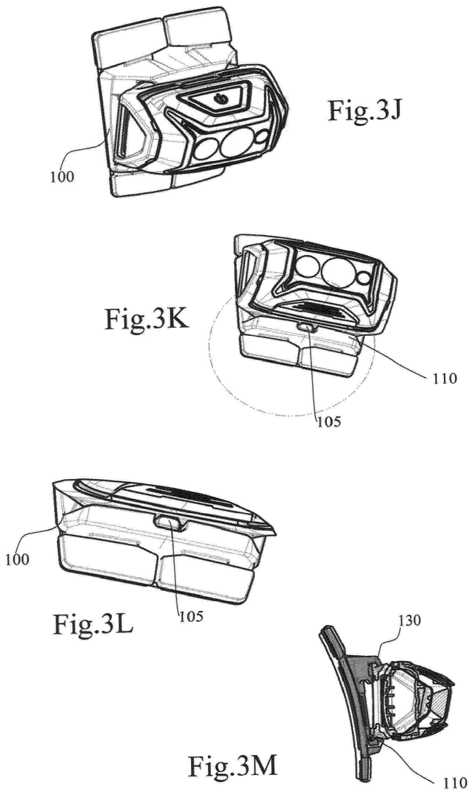

La figure 3E illustre une coupe transversale de l'adaptateur 100 et de la lampe 10, tandis que les figures 3F, 3G, 3H, 3I, 3J et 3K illustrent un rapprochement de la lampe amovible 10 et l'engagement de ses nervures 11 et 12 dans les rainures associées aux pattes de support 110 et 130, jusqu'au complet engagement des nervures courbes 11 et 12 dans leurs rainures respectives et au verrouillage de la lampe 100 au moyen du clip de verrouillage 105.

La figure 3L illustre une vue de détail du clip de verrouillage 105 lorsque la nervure 11 de la lampe 10 est en place.

Enfin, la figure 3M est une coupe transversale de la lampe 10 fixée sur l'adaptateur 100, et solidement maintenue par les deux pattes de fixation 110 et 130.

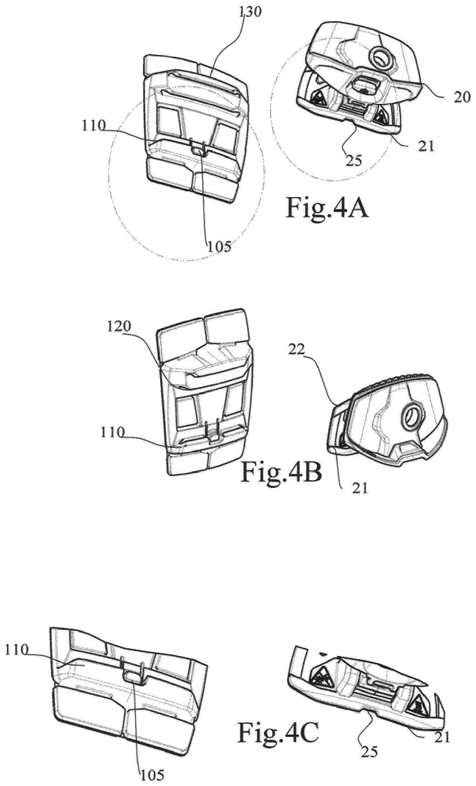

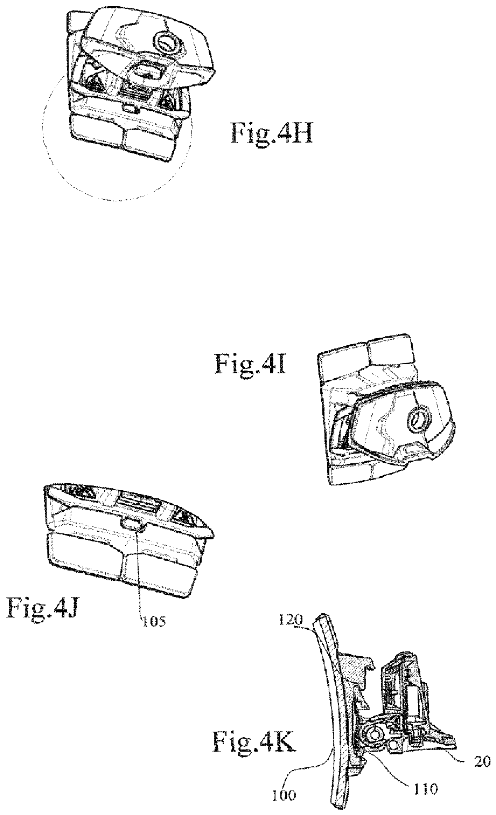

On décrit à présent en relation avec les figures 4A-4K l'utilisation du même adaptateur 100 pour assurer une fixation solide et sécurisée d'une lampe amovible 20 de plus petite dimension, comportant une nervure inférieure 21 et une nervure supérieure 22, chacune de profil circulaire représentée dans la figure 4B, et configurées pour s'engager dans les rainures correspondantes des pattes de support 110 et 120 de l'adaptateur 100.

La lampe 20 correspond à une lampe de type « sport », de petite dimension qui, dans un mode de réalisation préféré comporte également une encoche 25 similaire à l'encoche 15 de la lampe 10, comme cela apparaît dans la figure 4C.. La nervure supérieure 22 ne comporte pas d'encoche, à l'instar de la nervure 12 de la lampe 10.

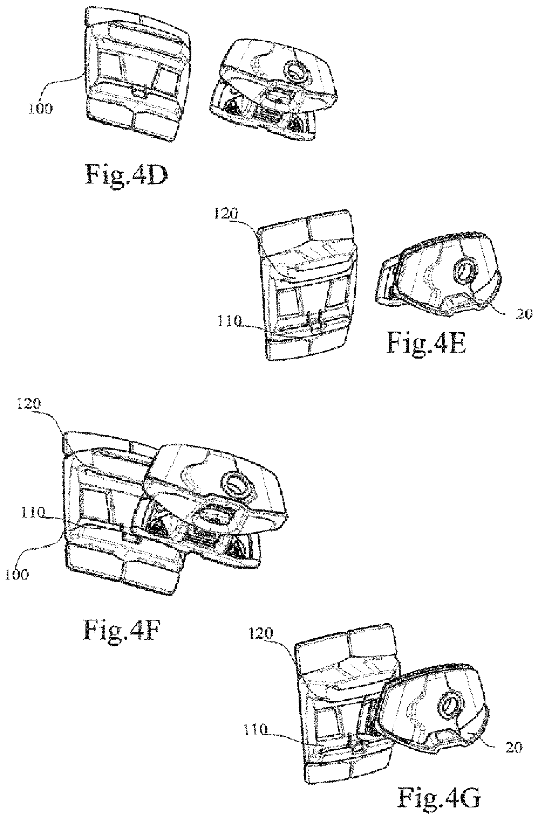

Les figures 4D, 4E, 4F, 4G 3G, 4H et 4I illustrent un rapprochement de la lampe amovible 20 et l'engagement de ses nervures 21 et 22 dans les rainures associées aux pattes 110 et 120, jusqu'au complet engagement des nervures et au verrouillage de la lampe 20 avec le clip de verrouillage 105.

La figure 4J illustre une vue de détail du clip de verrouillage 105 lorsque la nervure 21 de la lampe 20 est en place et, enfin, la figure 4K est une coupe transversale de la lampe 20 fixée sur l'adaptateur 100, et solidement maintenue par les deux pattes de fixation 110 et 120.

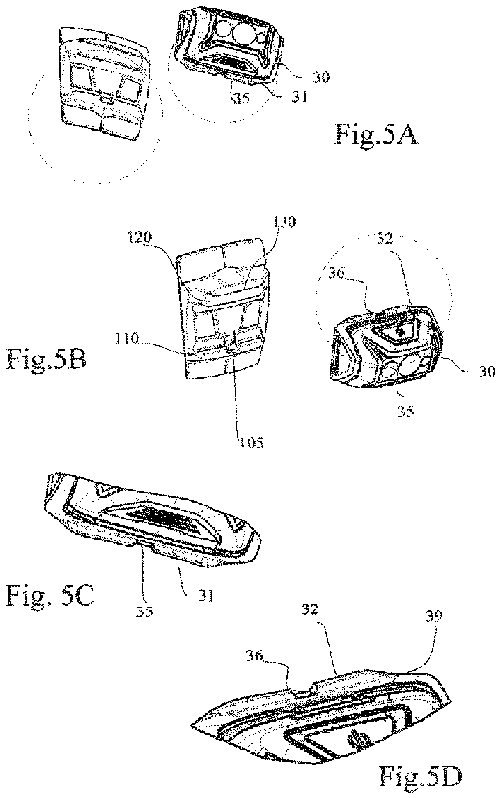

On décrit à présent en relation avec les figures 5A-5D une lampe portative amovible 30 de grande dimension, comportant deux nervures de profil circulaire, comportant chacune en son milieu une encoche 35 (resp. 36) configurée pour coopérer avec le clip de verrouillage 105 de l'adaptateur.

Comme précédemment, les nervures 31 et 32 sont configurées pour venir s'engager dans les rainures correspondantes des pattes 110 et 130 et présentent donc un profil circulaire avec un rayon de courbure compris entre 100mm et 200mm.

La Figure 5C illustre un détail de la nervure inférieure 31 et de son encoche 35 tandis que la figure 5D illustre un détail de la nervure supérieure 32 avec son encoche 36.

Grâce à cette double encoche 35-36, la lampe 30 peut venir se fixer sur l'adaptateur 100 - ou tout autre adaptateur illustré notamment dans les figures 2B-2D, de deux manière différentes, avec le bouton de commande 39 situé en haut ou en bas, au choix de l'utilisateur.

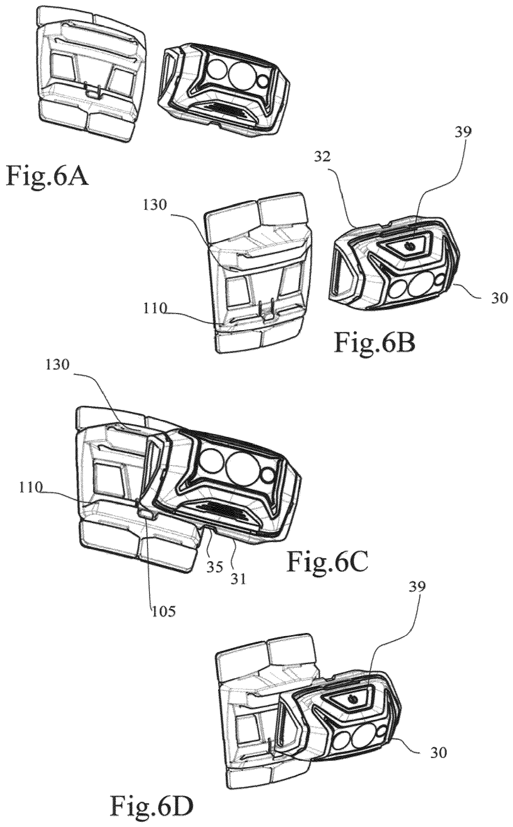

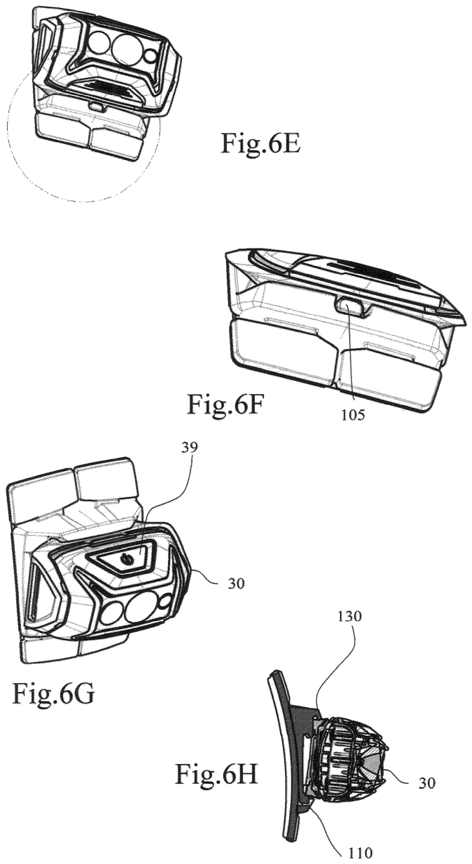

Les figures 6A, 6B, 6C, 6D, 6E , 6F, 6G, 6H, illustrent un rapprochement de la lampe amovible 30 et l'engagement de ses nervures 31 et 32 dans les rainures associées aux pattes les plus éloignées 110 et 130, jusqu'au complet engagement des nervures et au verrouillage de la lampe 30 avec le clip de verrouillage 105 coopérant avec la rainure 35.

Dans cette disposition, la lampe amovible 30 est positionné suivant une première configuration avec le bouton de commande 39 situé en haut...

Les figures 6A, 6B, 6C, 6D, 6E , 6F, et 6G illustrent un rapprochement de la lampe amovible 30 et l'engagement de ses nervures 31 et 32 dans les rainures associées aux pattes de support 110 et 130 qui sont les plus éloignées, jusqu'au complet engagement des nervures et au verrouillage de la lampe 30 avec le clip de verrouillage 105 coopérant avec la rainure 35.

La figure 6H est une coupe illustrant le positionnement de la lampe 30 maintenu entre les deux pattes de support 110 et 130.

Dans cette disposition, la lampe amovible 30 est positionné suivant une première configuration avec le bouton de commande 39 situé en haut...

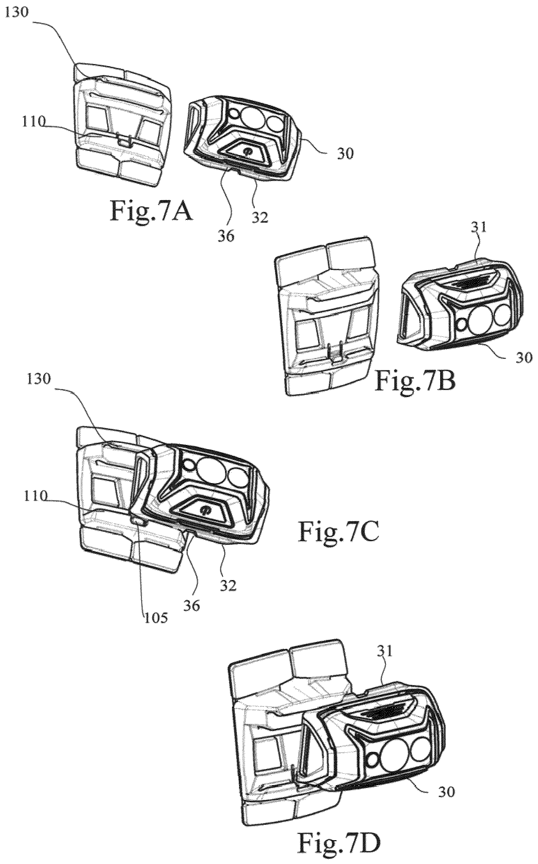

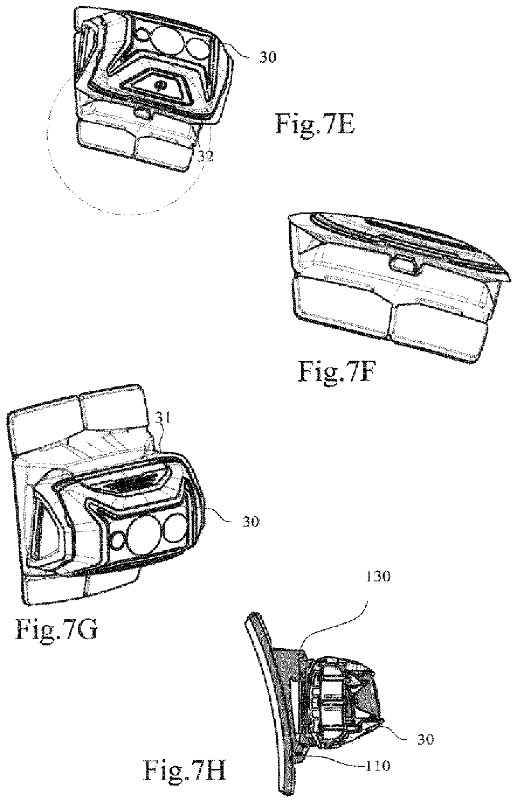

Les figures 7A, 7B, 7C, 7D, 7E , 7F, et 7G illustrent un rapprochement de la lampe amovible 30 et l'engagement de ses nervures 31 et 32 dans les rainures associées aux pattes de support 110 et 130 qui sont les plus éloignées0, jusqu'au complet engagement des nervures et au verrouillage de la lampe 30 avec le clip de verrouillage 105 coopérant avec la rainure 36.

La figure 7H est une coupe illustrant le positionnement de la lampe 30 maintenu entre les deux pattes 110 et 130.

Dans cette disposition, la lampe amovible 30 est positionnée suivant une seconde configuration avec le bouton de commande 39 situé en bas.

Cette seconde configuration peut s'avérer très avantageuse dans certaines circonstances, par exemple lorsque la lampe amovible est montée sur un casque de chantier sur lequel existe d'autres accessoires pouvant gêner l'utilisation d'un bouton de commande situé sur le haut. Alternativement, l'utilisateur pourrait également préférer commander la lampe amovible avec son pouce, ce qui l'amènera également à privilégier cette seconde configuration et, par conséquent, la coopération de l'encoche 36 avec le clip de verrouillage 105.

Comme on le voit l'adaptateur universel proposé présente de vastes possibilités de configurations, avec la fixation de lampes de dimension variées et présente en outre une grande compacité du fait de la courbure des pattes de fixation permettant un maintien d'une lampe amovible au plus près d'un casque de chantier.

## Revendications

1. Adaptateur pour une lampe portative amovible destiné à être fixé sur un support et comportant :
une base ou un cadre (101) comportant une première patte de support (110) et une seconde patte de support (120);
dans lequel la première patte de support (110) comporte, sur sa face supérieure, une première rainure de profil sensiblement circulaire, configurée pour permettre un engagement d'une première nervure (21) sensiblement circulaire d'une lampe portative amovible présentant une première dimension (20);
dans lequel la seconde patte de support (120) comporte, sur sa face inférieure, une seconde rainure de profil sensiblement circulaire, configurée pour permettre un engagement d'une seconde nervure (22) de profil sensiblement circulaire de ladite lampe portative amovible (20);
dans lequel l'adaptateur comporte un système de verrouillage basé sur une butée ou un clip de verrouillage destiné à bloquer l'engagement desdites première et seconde nervures (21, 22) à une position prédéterminée.

2. Adaptateur pour une lampe portative amovible tel que défini dans la revendication 1 dans lequel ladite base ou ledit cadre (100) comporte une languette ou clip de verrouillage (105) comportant un téton venant se positionner au milieu de la première rainure correspondant à ladite première patte (110), ladite languette présentant une flexibilité suffisante pour permettre une déformation élastique, en sorte que lorsque l'on engage la première nervure (21) de ladite lampe portable amovible (20) dans la rainure correspondante de ladite première patte (110),
dans lequel la première nervure (21) comporte une encoche (25) en son milieu configurée pour coopérer avec ladite languette ou clip de verrouillage (105), on vient imprimer une sollicitation sur ladite languette ou clip de verrouillage (105) de manière à fléchir celle-ci afin de permettre le glissement de ladite première nervure (11) jusqu'à ce que ladite encoche (25) vienne se positionner sous ladite languette ou clip de verrouillage (105) de manière à venir bloquer le positionnement de ladite lampe portable amovible (20).

3. Adaptateur selon la revendication 2, comportant en outre une troisième patte de support (130) située au dessus de la seconde patte (120); dans lequel la troisième patte de support (130) comporte, sur sa face inférieure, une troisième rainure de profil sensiblement circulaire configurée pour permettre un engagement d'une seconde nervure (21) de profil sensiblement circulaire d'une lampe portative présentant une deuxième dimension (10, 30), dans laquelle la seconde dimension est supérieure à la première dimension.

4. Adaptateur selon l'une des revendications 1 à 3, dans lequel les rainures correspondant auxdites première, seconde et troisième pattes circulaires présentent un rayon de courbure compris dans une plage égale à 100-200mm, et de préférence égal à 150mm.

5. Adaptateur selon l'une des revendications 1 à 5 dans lequel l'adaptateur est un adaptateur de bicyclette.

6. Adaptateur selon l'une des revendications 1 à 5 dans lequel l'adaptateur est un adaptateur de casque de chantier comportant une languette arrière (210) configurée pour être insérée dans une fente correspondante située à l'avant d'un casque de chantier de manière à permettre la fixation d'une lampe portative amovible sur ledit casque de chantier ;
dans lequel la languette (210) est réalisée dans un matériau élastique permettant, lors de l'insertion de la languette dans la fente du casque, d'imprimer une sollicitation de l'adaptateur vers le casque de chantier.

7. Adaptateur selon la revendication 6 dans lequel ladite languette arrière comporte un renfoncement circulaire destiné à recevoir un pastille ou patch circulaire autocollante permettant une fixation sécurisée de l'adaptateur sur le casque de chantier.

8. Adaptateur selon l'une des revendications 1 à 5 dans lequel l'adaptateur (100) comporte quatre pattes de fixation (101, 102, 103, 104) dotées chacune d'un adhésif autocollant de manière à permettre la fixation de l'adaptateur sur un support sensiblement plan.

9. Lampe frontale comportant un première nervure (11, 21, 31) et une seconde nervure (12, 22, 32) configurées pour venir se glisser dans la rainure correspondante de ladite première patte (110) ou de l'une desdites seconde (120) ou troisième patte (120) de l'adaptateur tel que défini dans l'une quelconque des revendications 1 à 10.

10. Adaptateur pour une lampe portative amovible destiné à être fixé sur un support et comportant :
une base ou un cadre (101) comportant une première patte de support (110) et une seconde patte de support (120);
dans lequel la première patte de support (110) comporte, sur sa face supérieure, une première rainure de profil sensiblement circulaire, configurée pour permettre un engagement d'une première nervure (21) sensiblement circulaire d'une lampe portative amovible présentant une première dimension (20);
dans lequel la seconde patte de support (120) comporte, sur sa face inférieure, une seconde rainure de profil sensiblement circulaire, configurée pour permettre un engagement d'une seconde nervure (22) de profil sensiblement circulaire de ladite lampe portative amovible (20);
dans lequel les première et seconde pattes de support (110, 120) forment au moins un système de rail circulaire dans le but de permettre un mouvement de glissement et de guidage circulaire desdites première et seconde nervures relativement auxdites première et seconde rainures de façon à assurer un mouvement circulaire d'une lampe portative ou d'un accessoire amovible relativement au support adaptateur préalablement à son verrouillage.

11. Adaptateur selon la revendication 10 dans lequel ladite base ou ledit cadre (100) comporte une languette ou clip de verrouillage (105) comportant un téton venant se positionner au milieu de la première rainure correspondant à ladite première patte (110), ladite languette présentant une flexibilité suffisante pour permettre une déformation élastique, en sorte que lorsque l'on engage la première nervure (21) de ladite lampe portable amovible (20) dans la rainure correspondante de ladite première patte (110),
dans lequel la première nervure (21) comporte une encoche (25) en son milieu configurée pour coopérer avec ladite languette ou clip de verrouillage (105), on vient imprimer une sollicitation sur ladite languette ou clip de verrouillage (105) de manière à fléchir celle-ci afin de permettre le glissement de ladite première nervure (11) jusqu'à ce que ladite encoche (25) vienne se positionner sous ladite languette ou clip de verrouillage (105) de manière à venir bloquer le positionnement de ladite lampe portable amovible (20) lors de son guidage et glissement circulaire.

12. Adaptateur selon la revendication 11, configuré pour être fixé sur un casque de sécurité.

13. Adaptateur selon la revendication 12, comportant en outre une troisième patte de support (130) située au dessus de la seconde patte (120); dans lequel la troisième patte de support (130) comporte, sur sa face inférieure, une troisième rainure de profil sensiblement circulaire configurée pour permettre un engagement d'une seconde nervure (21) de profil sensiblement circulaire d'une lampe portative présentant une deuxième dimension (10, 30), dans laquelle la seconde dimension est supérieure à la première dimension.

14. Adaptateur selon l'une des revendications 11 à 13, dans lequel les rainures correspondant auxdites première, seconde et troisième pattes circulaires présentent un rayon de courbure compris dans une plage égale à 100-200mm, et de préférence égal à 150mm.

15. Adaptateur selon l'une des revendications 11 à 15 dans lequel l'adaptateur est un adaptateur de bicyclette.
